# EUROPEAN PATENT APPLICATION

(11) **EP 2 741 293 A1**
(43) Date of publication of application: **11.06.2014**
(21) Application number: 13193135.4
(22) Date of filing: 15.11.2013
(51) Int. Cl.: G11B 27/034, G11B 27/28

(54) **Video processing apparatus and method**

(30) Priority: 05.12.2012 JP 2012266397; 24.07.2013 KR 20130087605
(71) Applicant: Samsung Electronics Co., Ltd, Gyeonggi-do 443-742 (KR)
(72) Inventor: Tanaka, Toshiyuki, Kanagawa-ken, Kanagawa (JP)
(74) Representative: Davies, Robert Ean

(57) **Abstract**

A video processing apparatus and method are provided. The video processing apparatus includes a first video capture unit that captures an image of a user. The video processing apparatus further includes an analysis unit that recognizes the user's face from a first video captured by the first video capture unit, and analyzes a feature of the user's face. The video processing apparatus further includes an evaluation value calculation unit that calculates an evaluation value based on the analyzed feature of the user's face, when capturing or displaying a second video. The video processing apparatus also includes a recording unit that records the evaluation value to be mapped to a timeline of the second video. The video processing apparatus also includes a video editing unit that extracts a partial video from the second video based on the evaluation value to generate a video summary.

## Description

### RELATED APPLICATIONS

This application claims the priority benefit under 35 U.S.C. § 119(a) from Japanese Patent Application No. 2012-266397, filed on December 5, 2012, in the Japanese Patent Office and from Korean Patent Application No. 10-2013-0087605, filed on July 24, 2013, in the Korean Intellectual Property Office, the disclosures of which are incorporated herein in their entirety by reference.

### BACKGROUND

### 1. Field

One or more embodiments of the present disclosure relate to a video processing apparatus and method.

### 2. Related Art

Recently, electronic devices such as digital cameras, smartphones, etc. include a video capturing function and a playback function. Video is suitable to express a vivid sense, but in comparison with a still image, much time is expended in checking playback contents. Also, in playing back a video, there are many parts in addition to a main scene of the video, and thus, despite a video being recorded, a number of times the video is played back may be low.

Therefore, it is desirable to automatically and efficiently produce or edit a video summary.

Methods of producing a video summary of a video are widely known. For example, a character or subject of a video may be designated by a user. A video summary of other videos including the designated character may be produced by extracting scenes of the video that include the designated character. Also, a specific feature or voice of the character may be detected as events, thus a video summary may be generated by varying a playback speed based on occurrence of those events. Furthermore, in capturing a still image with a digital camera, a level of viewing satisfaction of a viewer of a video may be set based on whether the viewer has a smiling face while viewing the video.

However, a method that detects a feature or voice of a character to produce a video summary has a problem in that the video summary is limited to those scenes that contain the feature or voice of the character. In addition, the method is unable to guarantee that a scene with the designated character will be inserted into the video summary, and moreover, it is unable to guarantee that a scene with the voice of the designated character will be inserted into the video summary. Due to this, it is difficult for the user to produce a desired video summary. Furthermore, when a designated character frequently appears in a video, it is difficult to determine a main scene with the designated character from other scenes with the designated character.

Moreover, a method of determining whether a viewer has a smiling face for setting a level of satisfaction is limited to still images, and is not for generating a video summary of a video.

### SUMMARY

One or more embodiments of the present disclosure include a video processing apparatus and method for generating a video summary of a video with a user's intent accurately reflected therein.

Various embodiments will be set forth in part in the description which follows and, in part, will be apparent from the description, or may be learned by practice of the presented embodiments.

According to one or more embodiments, a video processing apparatus includes a first video capture unit that captures an image of a user. The video processing apparatus further includes an analysis unit that recognizes the user's face from a first video captured by the first video capture unit, and analyzes a feature of the user's face. The video processing apparatus further includes an evaluation value calculation unit that calculates an evaluation value based on the analyzed feature of the user's face , when capturing or displaying a second video. The video processing apparatus also includes a recording unit that records the evaluation value to be mapped to a timeline of the second video. The video processing apparatus also includes a video editing unit that extracts a partial video from the second video based on the evaluation value to generate a video summary.

The video processing apparatus may further include a second video capture unit that captures the second video. The evaluation calculation unit calculates the evaluation value when the second video capture unit captures the second video.

The evaluation value calculation unit may extract a facial expression factor based on the feature of the user's face analyzed from the first video, when the second video capture unit captures the second video.

The video editing unit may sequentially extract a partial video of a timeline section, in which the evaluation value is greater than a threshold value, to generate the video summary.

The video editing unit may change the threshold value such that a total time of the partial video corresponds to a predetermined editing time, thereby extracting the partial video.

The video editing unit may sequentially extract the partial video of a buffered timeline section obtained by adding buffer times before, after, or both before and after the timeline section in which the evaluation value is greater than the threshold value.

The evaluation value calculation unit may extract a facial expression factor based on one or more predetermined rules.

The evaluation value calculation unit may extract, based on the one or more predetermined rules, the facial expression factor as at least one of a factor of eyes becoming narrow, a factor of the eyes being opened wide, a factor of corners of the eyes slanting downward, a factor of a mouth being opened, or a factor of corners of the mouth slanting upward, in the facial expression.

The one or more predetermined rules may be defined to give a high importance to a factor which is determined as greatly affecting an expression change of the user's face.

The recording unit may record, as metadata, the evaluation value in a video file of the second video.

The recording unit may record the evaluation value as a separate file that corresponds to a video file of the second video in a one-to-one relationship.

According to one or more embodiments of the present disclosure, a video processing method includes: capturing at least one image of a user when capturing or displaying a second video; recognizing the user's face from the at least one image of the user, and analyzing a feature of the user's face; extracting a facial expression factor for the user's face based on the analyzed feature of the user's face to calculate an evaluation value; recording the evaluation value to be mapped to a timeline of the second video; and extracting a partial video from the second video based on the evaluation value to generate a video summary for the second video.

The video processing method may further include capturing the second video. The calculating of the evaluation value may include calculating the evaluation value when capturing the second video.

The generating of the video summary may include sequentially extracting a partial video of a timeline section, in which the evaluation value is greater than a threshold value, to generate the video summary.

The generating of the video summary may include changing the threshold value such that a total time of the partial video corresponds to a predetermined editing time, thereby extracting the partial video.

The generating of the video summary may include sequentially extracting the partial video of a buffered timeline section obtained by adding buffer times before, after, or both before and after the timeline section in which the evaluation value is greater than the threshold value.

The calculating of an evaluation value may include extracting a facial expression factor based on one or more predetermined rules.

The one or more predetermined rules may be defined to give a high importance to a factor which is determined as greatly affecting an expression change of the user's face.

The recording may include recording, as metadata, the evaluation value in a video file of the second video.

The recording may include recording the evaluation value as a separate file that corresponds to a video file of the second video in a one-to-one relationship.

According to one or more embodiments of the present disclosure, a non-transitory computer-readable storage medium storing a program for executing the video processing method.

### BRIEF DESCRIPTION OF THE DRAWINGS

These and/or other aspects will become apparent and more readily appreciated from the following description of the embodiments, taken in conjunction with the accompanying drawings of which:
FIG. 1 is a diagram illustrating a state in which a video processing apparatus, such as a smartphone, a digital camera, or the like, is capturing a subject;
FIG. 2 is a diagram illustrating an image captured by the video processing apparatus;
FIG. 3 is a schematic diagram illustrating a configuration of a photographing apparatus according to an embodiment;
FIGS. 4 and 5 are diagrams for describing one example of a rule defining an evaluation value based on facial expression factors;
FIG. 6 is a chart illustrating an automatic editing function of a video editing unit;
FIG. 7 is a chart illustrating extracted evaluation values of the facial expression factors of FIGS. 4 and 5 and a sum of the evaluation values for a portion of a video over time;
FIG. 8 shows a relationship between a sampling time for a video summary and the sum of the evaluation values of FIG. 7 where the sampling time is linearly interpolated based on the sum;
FIG. 9 is a schematic diagram illustrating examples of files for storing evaluation values; and
FIG. 10 is a flowchart illustrating a video processing method performed by the photographing apparatus.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain various features of the present description.

Hereinafter, embodiments of the invention will be described in detail with reference to the accompanying drawings. In addition, in the present specification and drawings, like reference numerals refer to like elements throughout, and thus, redundant descriptions will be omitted.

In recent portable electronic devices such as smartphones and the like, a self-capture camera (an inward-facing or rear camera) is mounted on a user side separately from a subject-capture camera. It will be understood by those of ordinary skill in the art that a configuration of the self-capture camera may be applied to various devices including portable devices such as smartphones, tablet personal computers (PCs), etc., in addition to digital cameras.

In photographing apparatuses, due to an influence of miniaturization, a liquid crystal display (LCD) of the photographing apparatus (e.g., a smartphone or digital camera) may display a subject based on input from the photographer without requiring the photographer to use a viewfinder. In this case, the photographer may use the photographing apparatus to capture an image of a face of a subject, which is separated from the photographing apparatus by a certain distance, and thus, when the photographing apparatus includes the self-capture camera, the photographing apparatus may also capture an image of a whole face of the photographer.

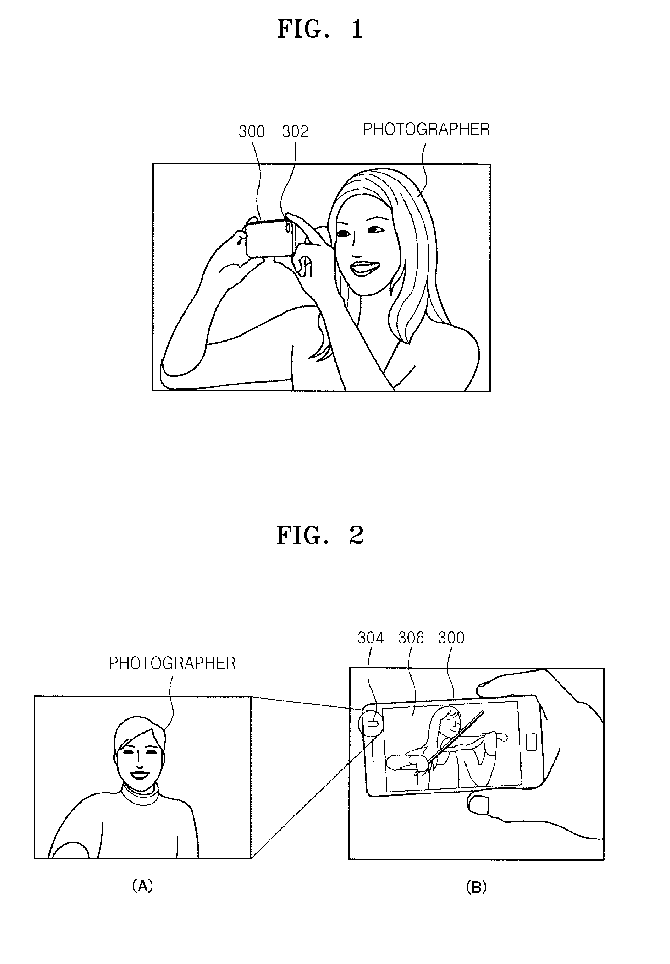

FIG. 1 is a diagram illustrating a state in which a video processing apparatus 300, such as a smartphone, a digital camera, or the like, is capturing an image of a subject. The video processing apparatus 300 captures an image of the subject with a front camera 302 based on user input by a photographer. Also, the video processing apparatus 300 includes a rear camera 304 opposite (e.g., on the photographer side) to the front camera 302. Thus, the rear camera 304 may capture an image of the photographer's face.

FIG. 2 is a diagram illustrating an image captured by the video processing apparatus 300. Here, a portion (B) of FIG. 2 illustrates a state in which an image captured by the front camera 302 of the video processing apparatus 300 is displayed by an LCD 306 of the video processing apparatus 300. Also, a portion (A) of FIG. 2 illustrates an image captured by the rear camera 304 of the video processing apparatus 300. As illustrated in the portion (A) of FIG. 2, an image of the photographer is captured by the rear camera 304. The video processing apparatus 300, including the rear camera 304 in addition to the front camera 302, may capture an image of the photographer's face while capturing an image of a subject.

An image captured by the front camera 302 may be relevant to various subjects such as a person, a landscape, a vehicle, a building, etc., and the front camera 302 does not always detect or capture a person's face. An image captured by the rear camera 304 is usually an image of a face of the photographer looking at the LCD 306 which is disposed near the rear camera 304. Therefore, the rear camera 304 may capture a front-facing profile image of the photographer looking at the LCD 306. Alternatively, the rear camera 304 may capture an image which is determinable as a user's front-facing profile image.

Moreover, light from the LCD 306 may provide illumination to the photographer's face even under low light conditions, and thus, even in a dark environment, the rear camera 304 may capture an image of a photographer's face. Therefore, the video processing apparatus 300 including the rear camera 304 is more likely to capture an image of a photographer's face, and thus detect a face and a facial expression.

In an embodiment, face information (particularly, expression information) of a photographer may be collected by using the rear camera 304 that may be used to capture an image of a face of the photographer. Also, a video captured by the video processing apparatus 300 may be automatically edited based on the face information (particularly, the expression information) of the photographer.

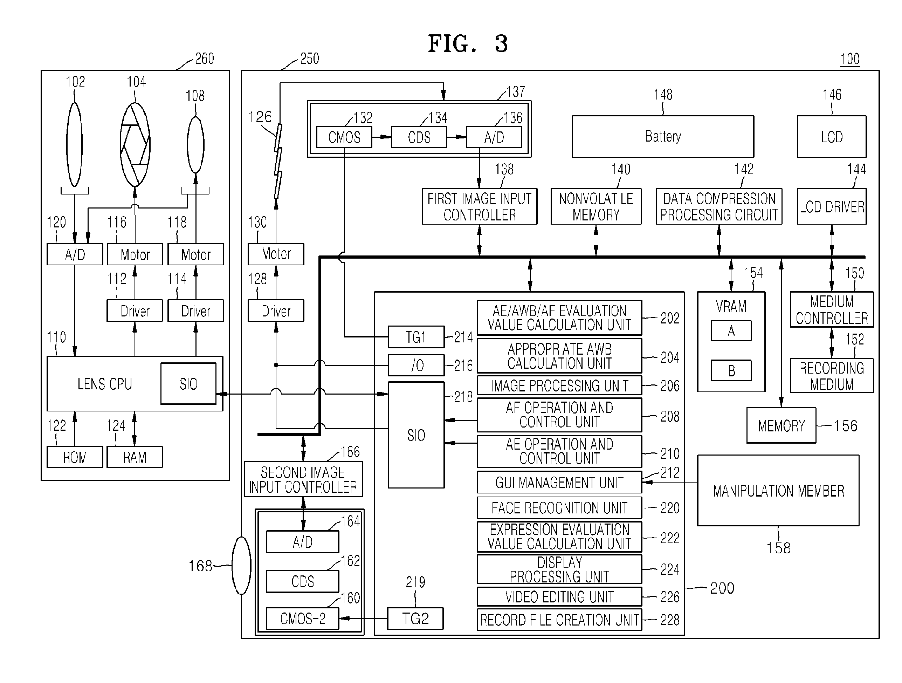

FIG. 3 is a schematic diagram illustrating a configuration of a photographing apparatus 100 as an example of the video processing apparatus 300 according to an embodiment. FIG. 3 illustrates a schematic block diagram for an image processing pipeline, in a digital still camera according to an embodiment.

As illustrated in FIG. 3, the photographing apparatus 100 according to an embodiment may include a zoom lens (or zoom lens group) 102, an aperture 104, a focus lens (or focus lens group) 108, a lens central processing unit (CPU) 110, a plurality of drivers 112 and 114, a plurality of motors 116 and 118, an analog-to-digital (A/D) converter 120, a read-only memory (ROM) 122, and a random access memory (RAM) 124.

Moreover, the photographing apparatus 100 may include a shutter 126, a driver 128, a motor 130, a complementary metal oxide semiconductor (CMOS) device 132 that is an image capture device, a correlated double sampling (CDS) circuit 134 integrated with an amplifier, an A/D converter 136, a first image input controller 138, and a CPU 200. The photographing apparatus 100 in one example comprises a video capture unit 137 that includes the CMOS device 132. The video capture unit 137 may further include the CDS circuit 134 and the A/D converter 136.

Moreover, the photographing apparatus 100 may include a nonvolatile memory 140, a compression processing circuit 142, an LCD driver 144, an LCD 146, a medium controller 150, a recording medium 152, a video RAM (VRAM) 154, a memory (a synchronous dynamic RAM (SDRAM)) 156, a manipulation member 158, and a battery 148. The manipulation member 158 may include directional buttons (e.g., up, down, left, right buttons), a power switch, mode dial, or other buttons, switches, or the like for user input.

The aperture 104 and the focus lens 108 are driven by operating the motors 116 and 118 which are respectively controlled by the drivers 112 and 114. The zoom lens 102 is a lens that moves back and forth in an optical axis direction to continuously change a focus distance. When capturing an image, the aperture 104 adjusts an amount of light incident on the CMOS device 132. When capturing an image, the shutter 126, driven by the motor 130 which is controlled by the driver 128, controls a time period during which the CMOS device 132 is exposed to the incident light. The focus lens 108 moves back and forth in the optical axis direction to adjust a focal point of an image of a subject formed by the CMOS device 132.

The CMOS device 132 is a device that converts light, which is incident through the zoom lens 102, the aperture 104, and the focus lens 108, into an electrical signal.

The CDS circuit 134 in one example includes a sampling circuit for removing noise of the electrical signal output from the CMOS device 132. The CDS circuit 134 is integrated with an amplifier for amplifying the electrical signal after the noise is removed. The CDS circuit 134 uses the sampling circuit integrated with the amplifier. In alternative embodiments, the photographing apparatus 100 may be configured with another circuit instead of the CDS circuit 134 for removing noise and amplifying the electrical signal from the CMOS device 132.

The A/D converter 136 converts the electrical signal generated by the CMOS device 132 and the CDS circuit 134 into a digital signal to generate raw data (image data) of an image. The first image input controller 138 controls an operation that inputs the raw data (the image data) of the image, generated by the A/D converter 136, to the recording medium 152.

Moreover, the photographing apparatus 100 according to an embodiment includes a second CMOS device 160 (CMOS-2) functioning as the rear camera 304, a CDS circuit 162 integrated with an amplifier, an A/D converter 164, and a second image input controller 166. The CDS circuit 162, the A/D converter 164, and the second input image controller 166 are configured for the CMOS device 160, analogously to the CDS circuit 134, the A/D converter 136, and the first image input controller 138 for the CMOS device 132. In one example, the photographing apparatus 100 includes a video capture unit 165 that includes the CMOS device 160. The video capture unit 165 may further include the CDS circuit 134 and the A/D converter 164. Also, the photographing apparatus 100 includes an optical lens 168 configured for the CMOS device 160. An optical axis of the optical lens 168 is directed towards a user that manipulates the photographing apparatus 100 (e.g., the photographer), and the optical lens 168 forms a subject image (e.g., an image of the photographer), corresponding to the photographer's face, onto a capture plane of the CMOS device 160. The CMOS device 160 converts light, which is incident through the optical lens 168, into an electrical signal. The rear camera 304 may be configured with the above-described elements (e.g., the CMOS 160, CDS circuit 162, A/D converter 164, second image controller 166, and optical lens 168).

The CDS circuit 162 in one example includes a sampling circuit for removing noise of the electrical signal output from the CMOS device 160. The CDS circuit 162 is integrated with an amplifier for amplifying the electrical signal after the noise is removed.

The A/D converter 164 converts the electrical signal generated by the CMOS device 160 and the CDS circuit 162 into a digital signal to generate raw data (image data) of an image. The second image input controller 166 controls an operation that inputs the raw data (the image data) of the image, generated by the A/D converter 164, to the recording medium 152.

The nonvolatile memory 140 is a memory that stores data for retention by the photographing apparatus 100. The nonvolatile memory 140 may further store a program for operating the CPU 200.

The data compression processing circuit 142 compresses data of an image, output from the CMOS devices 132 and 160, into an appropriate type of image data. A compression scheme of an image may be a reversible scheme or an irreversible scheme. Examples of an appropriate scheme may include joint photographic experts group (JPEG) and JPEG 2000.

The LCD 146 may display a live view before capture manipulation (e.g., a press of a shutter button), display various setting screens of the photographing apparatus 100, display a captured image, or display a video. The LCD driver 144 may be driven, and thus, the LCD 146 may display image data or various information of the photographing apparatus 100.

The memory (SDRAM) 156 temporarily stores an image captured by the CMOS device 132 or the CMOS device 160. The recording medium 152 has a storage capacity for storing a plurality of images. Read/writing of the image stored in the memory (SDRAM) 156 is controlled by the first and second image input controllers 138 and 166.

The VRAM 154 stores contents displayed by the LCD 146, thus a resolution or number of maximum display colors of the LCD 146 may depend on a capacity of the VRAM 154.

The recording medium 152 records images or video captured by the CMOS device 132 or the CMOS device 160. An input/output of the recording medium 152 is controlled by the medium controller 150. The recording medium 152 may use a memory card that is a card type storage device which stores data in a flash memory.

The CPU 200 may provide a signal-based command or a manipulation-based command (corresponding to manipulation of the manipulation member 158) to the CMOS devices 132 and 160 or the CDS circuits 134 and 162. The video processing apparatus 300 according to an embodiment includes only one CPU 200, but the signal-based command or a manipulation-based command may be provided by another CPU.

The CPU 200 includes an automatic exposure (AE)/ automatic white-balance (AWB)/ automatic focus (AF) evaluation value calculation unit 202, an appropriate AWB calculation unit 204, an image processing unit 206, an AF operation and control unit 208, an AE operation and control unit 210, a graphical user interface (GUI) management unit 212, a timing generation unit (TG1) 214, an input/output (I/O) 216, an SIO 218, and a timing generation (TG2) 219. Also, the CPU 200 includes a face recognition unit 220, an expression evaluation value calculation unit 222, a display processing unit 224, a video editing unit 226, and a record file creation unit 228.

The AE/AWB/AF evaluation value calculation unit 202 calculates an AE evaluation value (exposure amount information), an AWB evaluation value (white balance information), and an AF evaluation value (AF information) based on the image data output from each of the CMOS devices 132 and 160 (e.g., received from the first and second image input controllers 138 or 166). The appropriate AWB calculation unit 204 calculates an appropriate white balance value for the image data. The image processing unit 206 corrects a gain of an amount of light, processes an edge of an image (emphasizes a contour), and adjusts a white balance, for the image data.

The AF operation and control unit 208 determines a driving amount of the focus lens 108 when capturing an image of a subject on the basis of the AF evaluation value. The lens CPU 110 controls the driver 114 and drives the motor 118, on the basis of the determined amount of driving. Therefore, the focus lens 108 is driven with respect to a focusing position.

The AE operation and control unit 210 determines an aperture value and a shutter speed when capturing an image of a subject on the basis of the AE evaluation value. The CPU 200 controls the driver 128 and drives the motor 130, on the basis of the determined shutter speed. Therefore, the shutter 126 is driven. Also, the lens CPU 110 controls the driver 112 and drives the motor 116, on the basis of the determined aperture value. Therefore, the aperture 104 is driven.

When the manipulation member 158 is manipulated by a user, the GUI management unit 212 receives manipulation input information from the manipulation member 158. The CPU 200 performs various processing on the basis of the manipulation input information transferred from the manipulation member 158 to the GUI management unit 212. For example, when the GUI management unit 212 receives the manipulation input information, used to generate a video summary, from the manipulation member 158, the video editing unit 226 may perform processing for generating the video summary.

The timing generation unit (TG1) 214 inputs a timing signal to the CMOS device 132. Thus, a driving of the CMOS device 132 may be controlled by the timing signal from the timing generation unit (TG1) 214. The timing generation unit (TG1) 214 may provide the timing signal to control a time for which the CMOS device 132 is driven , thereby enabling the CMOS device 132 to have a function of an electronic shutter for input of incident light from a subject to the CMOS device 132.

Likewise, the timing generation unit (TG2) 219 inputs a timing signal to the CMOS device 160. Thus, driving of the CMOS device 160 may be controlled by the timing signal from the timing generation unit (TG2) 219. The timing generation unit (TG2) 219 may provide the timing signal to control a time for which the CMOS device 160 is driven, thereby enabling the CMOS device 160 to have the function of an electronic shutter for input of incident light from a subject (e.g., the photographer) to the CMOS device 160.

The image processing unit 206 performs image pre-processing, such as defective pixel correction and level correction, on RGB image signals obtained from the CMOS device 132 of FIG. 3, and additionally performs various electronic processing such as white balance correction, Bayer color interpolation, color correction, and gamma correction, thereby recording an image. In addition, each functional block of FIG. 3 may be configured by a circuit (hardware) or a CPU and a program (software) for operating the same, and the program may be stored in the nonvolatile memory 140, included in the photographing apparatus 100, or a recording medium such as a memory connected externally to the photographing apparatus 100.

As describe above, a target or subject (e.g., a person, a landscape, or the like) which is video-captured as a subject by a photographer is converted into image data by the CMOS device 132 (e.g., the front camera 302). A face of the photographer is converted into image data by the CMOS device 160 (e.g., the rear camera 304).

Moreover, in the embodiment, the CMOS devices 132 and 160 are used as capture elements, but the embodiment is not limited thereto. As another example, instead of the CMOS devices 132 and 160, another image sensor such as a charge-coupled device (CCD) may be used. The CMOS devices 132 and 160 may convert incident light of a subject into an electrical signal at a higher speed than a CCD device, and thus shorten a time until an image of the subject is captured and then synthesis processing of an image is performed.

As illustrated in FIG. 3, the photographing apparatus 100 according to an embodiment may be configured with a body 250 and an interchangeable lens 260, and the interchangeable lens 260 may be separated from the body 250. In a photographing apparatus 100 according to another embodiment, the body 250 and the interchangeable lens 260 may be configured as one body.

In the photographing apparatus 100 configured in this way, the rear camera 304 may monitor the photographer's facial expression, and the photographer's thoughts for an image which is being captured may be inferred based on the facial expression. Alternatively, it is possible to infer a photographer's thoughts for an image which is being displayed based on the facial expression. For example, when a parent wants to record or capture a conference call involving their child, there are many cases in which the parent waits a significant time before the child has appeared. Recording is then started after the child has appeared, in order to prevent recording while the child is not present. When a child whose image is to be recorded appears or a performance is started, an expression of the photographer may be naturally changed, or the photographer may speak to the child. Therefore, by recognizing a facial expression of the photographer, the photographer's subjective thought may be determined objectively based on an image captured by the rear camera 304.

An objective, numerical evaluation value may be calculated based on a facial expression of the photographer captured by the rear camera 304, for example, based on a detected level of joy, anger, sorrow, or pleasure of the photographer or a degree of change in the facial expression between image frames. Here, as a numerical value of an evaluation value becomes higher, it may be determined to be more likely that a main scene (e.g., a scene with a desired subject) is being recorded or displayed based on the evaluation value. Furthermore, by sequentially extracting frames or images from a video timeline section in which the evaluation value is sufficiently high, a video summary composed of the main scenes of the video may be automatically generated.

An evaluation value may be calculated by the CMOS device 132 when capturing a video. Also, the evaluation value may be calculated by the display processing unit 224 when displaying a video of a video file recorded in the recording medium 152. After the evaluation value is calculated, a video summary may be produced at another time based on the calculated evaluation value.

The face recognition unit (e.g., an analysis unit) 220 of the CPU 200 recognizes a facial expression of the photographer (or a user viewing a displayed video) from image data captured by the CMOS device 160 (e.g., the rear camera 304), and analyzes a feature of the face. The face recognition unit 220 may function as the analysis unit that analyzes a feature of the user's face.

The expression evaluation value calculation unit 222 extracts a facial expression factor to calculate an evaluation value, based on the facial expression recognized by the face recognition unit 220. Data of the digitized evaluation value may be generated simultaneously as the CMOS device 132 captures a video, and thus may be recorded on a same timeline as the captured video. Thus, recorded evaluation values are mapped to a timeline corresponding to a timeline of the captured video. Also, when calculating an evaluation value when displaying a video, the digitized evaluation value may be generated simultaneously when the display processing unit 224 displays the video, and thus may be recorded on the same timeline as the displayed video. Thus, the recorded evaluation values are mapped to a timeline corresponding to a timeline of the displayed video.

An evaluation value of a facial expression may be determined based on one or more predetermined rules. There is a personal difference in evaluation values of facial expressions for a user, and thus, relative determination may be performed by allocating a higher evaluation value to facial expressions which show an expression of joy, anger, sorrow, and pleasure, based on data of multiple facial expressions included in one video. According to the above description, a facial expression evaluation value is determined based on personal differences, and moreover, an absolute difference of evaluation values based on different conditions can be reduced. Hereinafter, a method of calculating evaluation values will be described in detail.

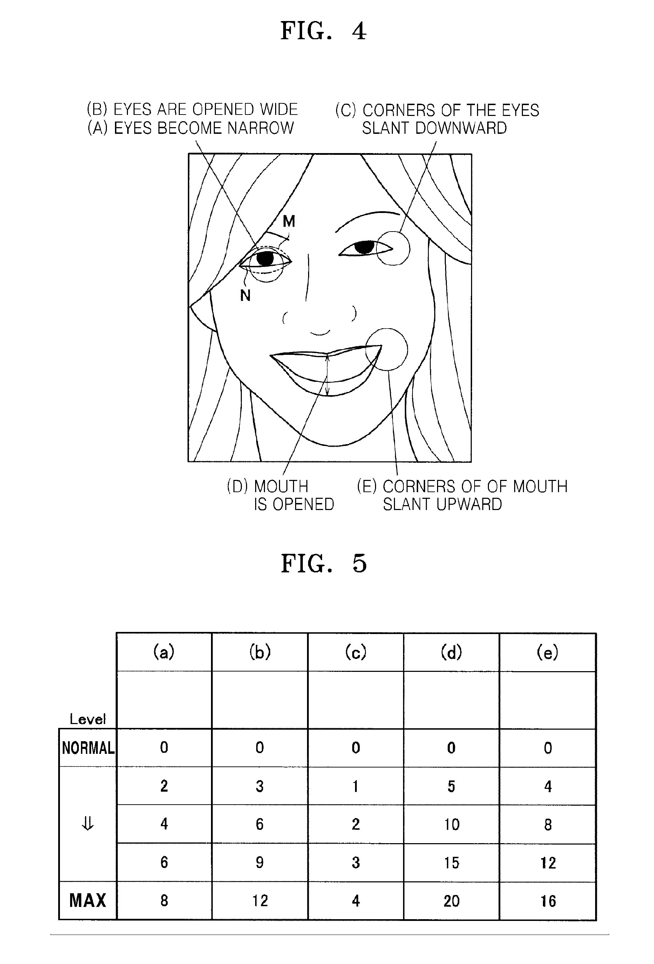

FIGS. 4 and 5 are diagrams for describing a rule defining an evaluation value. Here, FIG. 4 is a diagram illustrating facial expression factors for determining an evaluation value based on a person's facial expression.

As illustrated in FIG. 4, an evaluation value may be determined from factors such as (a) eyes become narrow, (b) the eyes are opened wide, (c) corners of the eyes slant downward, (d) a mouth is opened, and (e) corners of the mouth slant upward. For example, by observing the corners of the mouth (e), a change in the user's feelings may be estimated.

Therefore, a facial expression is analyzed according to a rule defining an evaluation value according to an embodiment, and at least one facial expression factor of (a) the eyes become narrow, (b) the eyes are opened wide, (c) corners of the eyes slant downward, (d) the mouth is opened, or (e) corners of the mouth slant upward may be extracted or digitized (e.g., converted to a numerical or digital value) and thus calculated as an evaluation value.

Moreover, a timing at which the photographer makes a sound may be detected based on the evaluation value even in a loud environment.

FIG. 5 is a diagram illustrating one example of a rule for determining an evaluation value based on the factors (a) to (e). As illustrated in FIG. 5, when each of the factors (a) to (e) has a normal level, an evaluation value is 0. The maximum evaluation value is set or updated when a change in the factor is detected, and the evaluation value is set to be increased according to a level of change. For example, an evaluation value when the eyes become as narrow as possible may be set to 8 for the factor "(a) the eyes become narrow", and evaluation values may be set to 2, 4, 6, and 8 in ascending order according to a level at which the eyes become narrow. Likewise, an evaluation value when the eyes are opened widest may be set to 12 for the factor "(b) the eyes are opened wide", and evaluation values may be set in ascending order according to a level at which the eyes are opened wide. Here, in a rule of FIG. 5, an importance of a factor which is determined as greatly affecting an expression change of a subject is high. For example, in an expression in which the mouth is opened wide (for example, when cheering for a child) and an expression in which the corners of the mouth slant upward greatly (for example, when smiling), the relative importance of factors "(d) the mouth is opened" and "(e) corners of the mouth slant upward" is reflected in determining an expression change of the subject. Therefore, an importance is given to each factor of FIG. 5 according to an expression change.

For example, comparing the factor "(c) corners of the eyes slant downward" and the factor "(d) the mouth is opened", an evaluation value when a change is great is set to 4 for the factor "(c) corners of the eyes slant downward", and an evaluation value when a change is great is set to 20 for the factor "(d) the mouth is opened". This is because even when two conditions are maximally changed, the factor "(d) the mouth is opened" is determined as more greatly representing a change in the facial expression. In this way, by changing an importance of an evaluation value according to the factors (a) to (e), a user's emotion can be more appropriately evaluated based on the evaluation value.

According to an embodiment, determining up to which level of a normal level to the maximum level a change is made for the factors (a) to (e) may be performed by previously setting the normal level and the maximum level on the basis of a user's expression. For example, in the factor "(a) the eyes become narrow", basic data such as an interval between two eyes, a size (e.g., a width) of the eyes, and a contour of a face are obtained when capturing an image of a user's face for the first time, and a size of normal eyes (a solid line N in FIG. 4) and a size of maximally opened eyes (a dashed line M in FIG. 4) are previously set based on the basic data. Furthermore, determining a range from the normal level to the maximum level at which the eyes are opened wide may be performed by detecting how much a size of the eyes becomes close to a range of the dashed line M for the size (the solid line N) of the normal eyes.

The face recognition unit 220 recognizes features of at least one of eyes, a mouth, or a nose from an image of a recognized face, and analyzes the features. The expression evaluation value calculation unit 222 calculates evaluation values of the respective factors (a) to (e) on the basis of the features detected by the face recognition unit 220, and adds the evaluation values of the respective factors to calculate Σ{(a)+(b)+(c)+(d)+(e)}, thereby calculating a final evaluation value.

According to an embodiment, the rule of FIG. 5 (e.g., which factors should be evaluated and their respective maximum levels) may be stored in the nonvolatile memory 140 of the photographing apparatus 100. Also, a user may manipulate the manipulation member 158 to change the rule of FIG. 5.

When generating a video summary, the video summary may be generated by extracting a partial video in which an evaluation value (e.g., the final evaluation value) exceeds a predetermined threshold value.

According to the above-described configuration, when a user looks at a captured video (or a displayed video), an evaluation value corresponding to their facial expression becomes higher in a case where the user feels an interest, is impressed, or has a change of feelings while viewing the captured (or displayed) video. Therefore, a video summary of a video with a user's interest accurately reflected therein can be generated by generating the video summary of the video on the basis of the evaluation value.

Moreover, the user (or a user viewing a displayed video) may know of the rule of FIG. 5. In this case, the user may deliberately change their expression, thus a use method of indicating and designating an editing point of a video may be performed. Also, a partial video to be extracted may be selected based on the user's deliberate facial expressions.

For example, when desiring to add a currently captured (or displayed) partial video into a video summary, by deliberately changing an expression to a smiling face, a high evaluation value may be calculated, and the currently captured (or displayed) video may be added into the video summary. Therefore, the video summary may be automatically edited by merely changing an expression without using a special instrument or equipment or performing special manipulation, even under a condition in which silence is desired or a condition in which capturing is performed while the user keeps their mouth closed so as to prevent disturbance to the subject caused by a voice or sound of the user. Also, instruction information for automatically editing a video summary may be added into a timeline of a video when displaying or recording the video.

As described above, a photographer may previously know of a rule for extracting a video, and thus, a section that he or she desires to remain for automatic editing may be deliberately added into a video while capturing the video by changing a facial expression. Accordingly, a desired partial video can be extracted, and a video summary may be efficiently generated.

Moreover, since an evaluation value may be calculated simultaneously when capturing a video, it is not required to detect a feature of a facial expression after capturing the video, and it is not required to again scan video data for calculating the evaluation value. Accordingly, an evaluation value can be calculated efficiently and quickly.

Next, processing performed by the photographing apparatus 100 according to an embodiment will be described.

A photographer captures an image of a subject by using the photographing apparatus 100, and a video of the subject is captured by the CMOS device 132. Simultaneously, an image of a face of the photographer (or a user viewing a displayed video) is captured by the CMOS device 160.

The face recognition unit 220 of the CPU 200 recognizes the photographer's face while the video of the subject is captured by the CMOS device 132, and analyzes a feature of the face. The expression evaluation value calculation unit 222 of the CPU 200 extracts the facial expression factors (a) to (e) of FIG. 5 for the photographer's face recognized by the face recognition unit 220, and calculates an evaluation value of a facial expression on the basis of the rule of FIG. 5. As described above, the expression evaluation value calculation unit 222 adds evaluation values of the respective factors (a) to (e) to finally calculate an evaluation value. The record file creation unit 228 records the calculated evaluation value mapped to the same timeline as the captured video.

Moreover, when calculating an evaluation value in displaying a video, the display processing unit 224 of the CPU 200 reads and displays a video file recorded in the recording medium 152. The displayed video is displayed by the LCD 146. While the video is being displayed, a user may view the video displayed by the LCD 146. At this time, the CMOS device 160 captures an image of the user's face. The face recognition unit 220 detects the user's face from the image captured by the CMOS device 160, and analyzes a feature of the face. Also, the expression evaluation value calculation unit 222 extracts the facial expression factors (a) to (e) of FIG. 5 from the user's face recognized by the face recognition unit 220, and calculates an evaluation value of a facial expression on the basis of the rule of FIG. 5. The record file creation unit 228 records the calculated evaluation value mapped to the same timeline as the displayed video. Accordingly, even in displaying a video, data of an evaluation value may be recorded on a timeline of the video similar to when capturing the video.

The video editing unit 226 of the CPU 200 edits a video on the basis of an evaluation of a facial expression. For example, the photographing apparatus 100 may allow the video editing unit 226 to perform an automatic editing function when the user desires to quickly check contents of the video or when the user desires to only edit a main scene or portion of the video. In this case, the video editing unit 226 edits the video when an instruction for video editing is input to the manipulation member 158 by the user.

In one example, the video editing unit 226 automatically edits the video immediately after capturing is ended or the display of the video is ended. In another example, the video editing unit 226 may automatically edit the video when the LCD 146 displays a video file as a thumbnail. A video summary generated by editing the video is recorded in the recording medium 152.

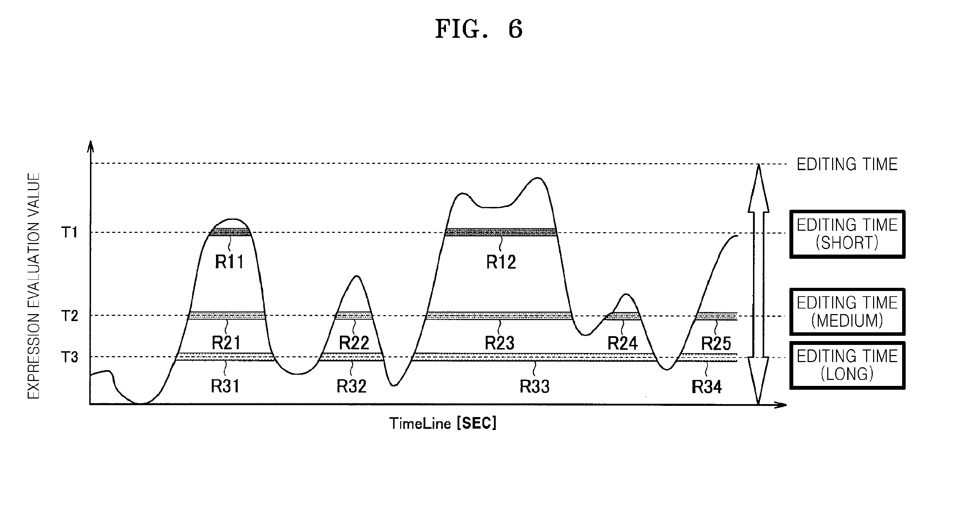

FIG. 6 is a chart illustrating the automatic editing function of the video editing unit 226.

In automatic editing by the video editing unit 226, partial videos of timeline sections having a high evaluation value are sequentially extracted based on an evaluation value of an expression. Here, the partial videos of timeline sections having the high evaluation value are determined based on a predetermined threshold value. In FIG. 6, three threshold values, such as a threshold value T1 when an editing time is short, a threshold value T2 when an editing time is of medium length, and a threshold value T3 when an editing time is long, are set as threshold values when extracting partial videos.

When an editing time is short, the video editing unit 226 extracts partial videos of timeline sections R11 and R12, in which an evaluation value exceeds the threshold value T1, to generate a video summary. When an editing time is of medium length, the video editing unit 226 extracts partial videos of timeline sections R21, R22, R23, R24, and R25, in which an evaluation value exceeds the threshold value T2, to generate a video summary. When an editing time is long, the video editing unit 226 extracts partial videos of timeline sections R31, R32, R33, and R34, in which an evaluation value exceeds the threshold value T3, to generate a video summary.

In this way, when performing the automatic editing function, the video editing unit 226 according to an embodiment may change a threshold value for the evaluation value in order for a video summary to have an editing time desired by a photographer (a user).

The video editing unit 226 according to an embodiment determines a threshold value for the evaluation value that enables a total time of a summary video to correspond to an editing time desired by the user. The video editing unit 226 extracts a partial video of a timeline section of an evaluation value exceeding the determined threshold value, and determines whether a total time of the extracted partial video approaches a desiring editing time. For example, when the total time of the extracted partial video is shorter than the desiring editing time, the video editing unit 226 may select a lower threshold value, thereby enabling the total time to correspond to the desired editing time. The video editing unit 226 extracts a timeline section in a threshold value in which the total time of the extracted partial video gets close to the desiring editing time, and connects a plurality of the extracted timeline sections to generate a video summary. In this way, a length of the video summary may be set to a length desired by the user.

In FIG. 6, the three threshold values T1 to T3 are shown, however, a threshold value may be set as an arbitrary value in addition to the threshold values T1 to T3. The user may manipulate the manipulation member 158 to freely set the length of the video summary. In this case, the video editing unit 226 adjusts a threshold value on the basis of length information of the video summary input from the manipulation member 158. Therefore, the length of the video summary may be set to a time desired by the user.

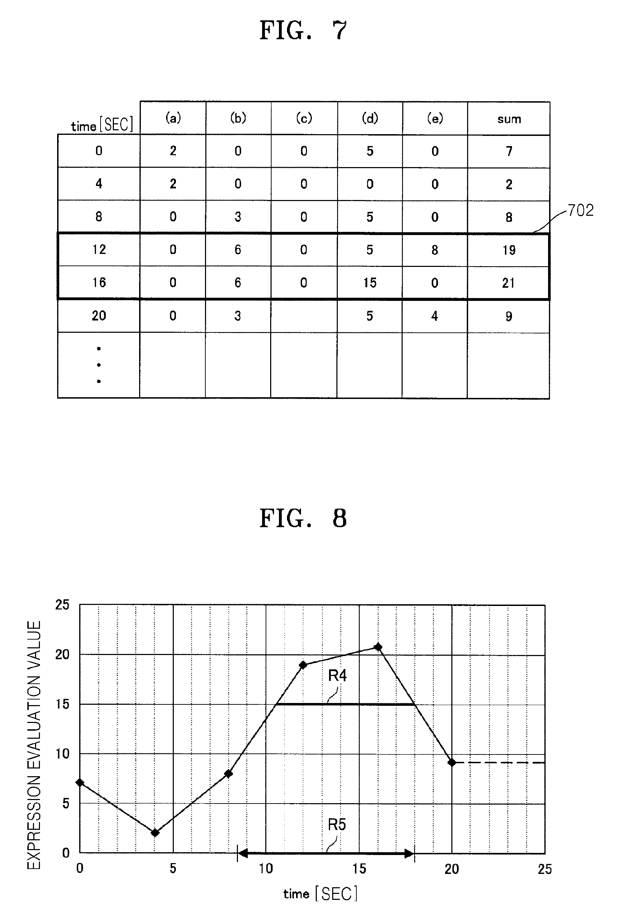

FIG. 7 is a chart illustrating evaluation values of respective factors (a) to (e) of FIGS. 4 and 5 and the sum of the evaluation values for a portion of a video. When a threshold value of an evaluation value is set to 15, the sum of evaluation values is 15 or more in a section from 12 sec to 16 sec, and thus, a video summary of the section of 12 sec to 16 sec indicated by a thick border 702 is extracted as a video summary.

FIG. 8 shows a relationship between a sampling time for a video summary and the sum of the evaluation values of FIG. 7 where the sampling time is linearly interpolated based on the sum.

In FIG. 8, an evaluation sampling interval is shown as an interval of 4 seconds. Also, a threshold value of an evaluation value is assumed to be 15. For example, in FIG. 8, a section in which the sum of the evaluation values exceeds 15 is a section R4 of 10.5 seconds to 18.0 seconds, and by extracting a video at a time corresponding thereto, a video summary may be generated.

When a partial video of a timeline section in which the sum of the evaluation values exceeds 15 is extracted for a video summary, the video summary may not be a desired video summary for all portions or a final portion of the video summary. In this case, a buffered timeline section may be used and the partial video to be extracted may be started about several seconds before a time at which the sum of the evaluation values exceeds 15 (e.g., by adding a buffer time before the start). A section R5 of FIG. 8 shows an example in which a start position of partial video for extraction (at 8.5 seconds) is set to a timing about two seconds earlier than the time at which the sum exceeds 15 (e.g., a buffer time of two seconds). Likewise, an end of the partial video for extraction may also be set to a timing later than a time at which the sum is equal to or less than 15 (e.g., by adding a buffer time after the end). Therefore, a portion of the video desired by a user is less likely to be omitted from a video summary, and a more desirable video summary may be produced. Images of a start and an end of a video summary may be displayed by a fade-in and fade-out effect, respectively.

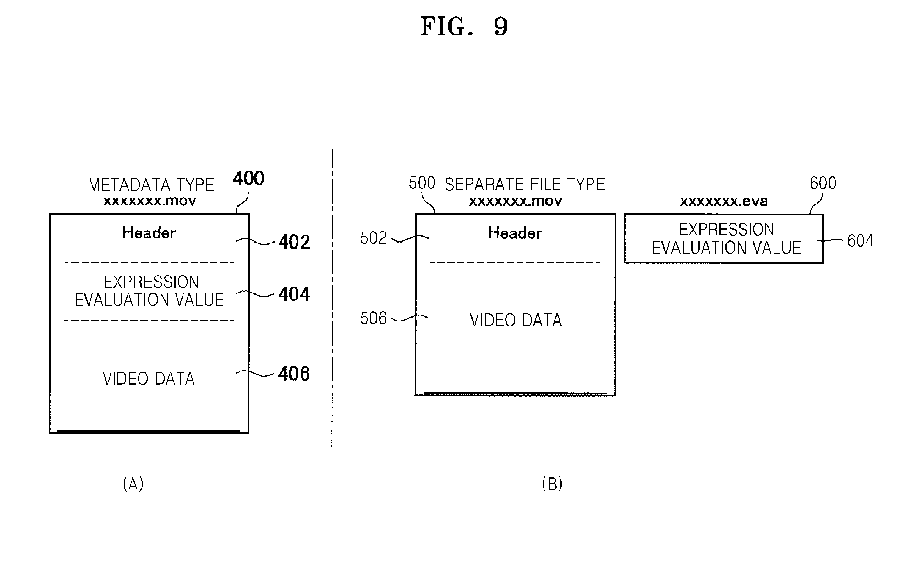

FIG. 9 is a schematic diagram illustrating examples of files for storing evaluation values.

A portion (A) of FIG. 9 illustrates one example in which an evaluation value is stored as metadata in a video file 400. In this case, the video file 400 may include a header 402, an evaluation value 404 of an expression, and video data 406.

A portion (B) of FIG. 9 illustrates another example in which an evaluation value is stored as a separate file 600 corresponding to a video file 500. In this case, the video file 500 includes a header 502 and video data 506. The file 600 includes an expression evaluation value 604The video file 500 and the evaluation value file 600 correspond to each other in a one-to-one relationship with a same file name, but different file extension (e.g., ".mov" and ".eva").

In all of the portions (A) and (B) of FIG. 9, the video data (e.g., video data 406 or 506) and the expression evaluation value (e.g., expression evaluation value 404 or 604) are recorded in the recording medium 152. The video file 500 and the evaluation value file 600 are stored to be mapped to each other and, and thus, the video editing unit 226 may generate a video summary at a later time. Also, as shown in FIG. 7, an evaluation value may be expressed as text data, and thus, the evaluation value is completely stored by merely storing the text data.

Therefore, when storing an evaluation value, an amount of data used by the evaluation values may be reduced by appropriately decreasing the amount of sampling (e.g., the sampling time interval) or expressing an evaluation value as text data, and thus, the evaluation value may be quickly read from the recording medium 152. Also, even when editing a video, an evaluation value may be quickly read by performing a read operation on the recording medium 152.

Moreover, a video summary generated by the video editing unit 226 is also recorded in the recording medium 152. Accordingly, the video editing unit 226 may generate a video summary, receive a selection of a video summary desired to be displayed by a user, and display the video summary.

For example, the LCD 146 may simultaneously display a thumbnail of a still image and a thumbnail of a video summary. When a thumbnail selection signal for the video summary is input based on a user's input, the video summary may be enlarged to a screen size of the LCD 146 and displayed. In addition, when the LCD 146 displays the video summary as a thumbnail, portions of a video which are displayed by repeating a video summary of a certain duration in an infinite loop may be all displayed as still images. As described above, by displaying the video summary as a thumbnail in the LCD 146, contents of a video are easily checked by using a thumbnail as in a thumbnail of a still image.

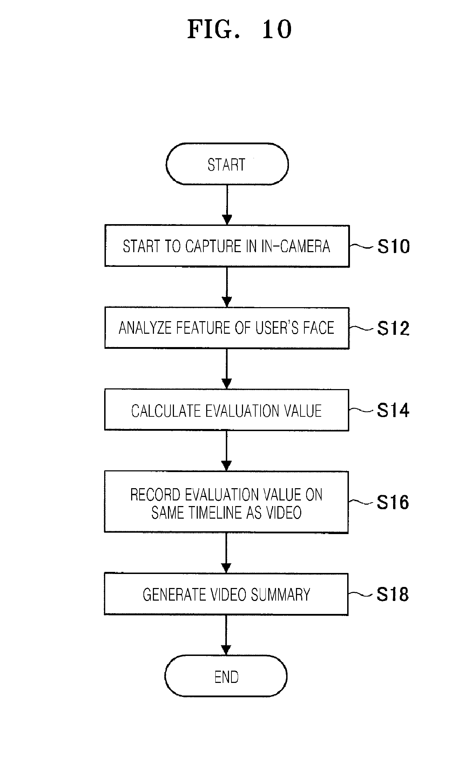

FIG. 10 is a flowchart illustrating a video processing method performed by the photographing apparatus 100.

First, in operation S10, the rear camera 304 starts to capture an image of a user while recording or displaying a video.

In operation S12, the photographing apparatus 100 recognizes the user's face from the image captured by the rear camera 304, and analyzes a feature of the user's face.

In operation S14, the photographing apparatus 100 extracts a facial expression factor for the user's face to calculate an evaluation value when capturing or displaying the video.

In operation S16, the photographing apparatus 100 records the evaluation value mapped to the same timeline as the capturing or displaying of the video.

In operation S18, the photographing apparatus 100 sequentially extracts partial videos based on the recorded evaluation value to generate a video summary.

As described above, according to an embodiment, a desired video summary is produced based on a facial expression of a user captured by the rear camera 304. Therefore, a portion of a video which a user feels is of interest and causes a change of feelings when recording or viewing the video is accurately extracted, and a video summary desired by the user is generated. Accordingly, automatic editing of a video is efficiently performed based on a user's subjective facial expressions. In addition, automatic editing of a video is performed independently from a condition (the presence of a person, a direction, the number of persons, etc.) of a subject in the video or a voice included in the video.

Moreover, a user may know a rule for calculating an evaluation value of a facial expression, and thus, a video summary is generated according to the user's intent by the user making deliberate facial expressions. Also, an evaluation value is more efficiently calculated simultaneously when capturing a video, and thus, it is not required to again decode video data for calculating the evaluation value.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the embodiments illustrated in the drawings, and specific language has been used to describe these embodiments. However, no limitation of the scope of the invention is intended by this specific language, and the invention should be construed to encompass all embodiments that would normally occur to one of ordinary skill in the art. The terminology used herein is for the purpose of describing the particular embodiments and is not intended to be limiting of exemplary embodiments of the invention. In the description of the embodiments, certain detailed explanations of related art are omitted when it is deemed that they may unnecessarily obscure the essence of the invention.

The embodiments of the invention may be written as computer programs and may be implemented in general-use digital computers that execute the programs using a computer readable recording medium. Examples of the computer readable recording medium include magnetic storage media (e.g., ROM, floppy disks, hard disks, etc.), and optical recording media (e.g., CD-ROMs, or DVDs). The apparatus described herein may comprise a processor, a memory for storing program data to be executed by the processor, a permanent storage such as a disk drive, a communications port for handling communications with external devices, and user interface devices, including a display, touch panel, keys, buttons, etc. When software modules are involved, these software modules may be stored as program instructions or computer readable code executable by the processor on a non-transitory computer-readable media such as magnetic storage media (e.g., magnetic tapes, hard disks, floppy disks), optical recording media (e.g., CD-ROMs, Digital Versatile Discs (DVDs), etc.), and solid state memory (e.g., random-access memory (RAM), read-only memory (ROM), static random-access memory (SRAM), electrically erasable programmable read-only memory (EEPROM), flash memory, thumb drives, etc.). The computer readable recording media may also be distributed over network coupled computer systems so that the computer readable code is stored and executed in a distributed fashion. This computer readable recording media may be read by the computer, stored in the memory, and executed by the processor.

It should be understood that the exemplary embodiments described herein should be considered in a descriptive sense only and not for purposes of limitation. Descriptions of features or aspects within each embodiment should typically be considered as available for other similar features or aspects in other embodiments.

Also, using the disclosure herein, programmers of ordinary skill in the art to which the invention pertains may easily implement functional programs, codes, and code segments for making and using the invention.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements, the invention may be implemented with any programming or scripting language such as C, C++, JAVA®, assembler, or the like, with the various algorithms being implemented with any combination of data structures, objects, processes, routines or other programming elements. Functional aspects may be implemented in algorithms that execute on one or more processors. Furthermore, the invention may employ any number of conventional techniques for electronics configuration, signal processing and/or control, data processing and the like. Finally, the steps of all methods described herein may be performed in any suitable order unless otherwise indicated herein or otherwise clearly contradicted by context.

For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. The words "mechanism", "element", "unit", "structure", "means", and "construction" are used broadly and are not limited to mechanical or physical embodiments, but may include software routines in conjunction with processors, etc.

The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention as defined by the following claims. Therefore, the scope of the invention is defined not by the detailed description of the invention but by the following claims, and all differences within the scope will be construed as being included in the invention.

No item or component is essential to the practice of the invention unless the element is specifically described as "essential" or "critical". It will also be recognized that the terms "comprises," "comprising," "includes," "including," "has," and "having," as used herein, are specifically intended to be read as open-ended terms of art. The use of the terms "a" and "an" and "the" and similar referents in the context of describing the invention (especially in the context of the following claims) are to be construed to cover both the singular and the plural, unless the context clearly indicates otherwise. In addition, it should be understood that although the terms "first," "second," etc. may be used herein to describe various elements, these elements should not be limited by these terms, which are only used to distinguish one element from another. Furthermore, recitation of ranges of values herein are merely intended to serve as a shorthand method of referring individually to each separate value falling within the range, unless otherwise indicated herein, and each separate value is incorporated into the specification as if it were individually recited herein.

While one or more embodiments of the invention have been described with reference to the figures, it will be understood by those of ordinary skill in the art that various changes in form and details may be made therein without departing from the spirit and scope of the invention as defined by the following claims.

## Claims

1. A video processing apparatus comprising:
a first video capture unit that captures an image of a user;
an analysis unit that recognizes the user's face from a first video captured by the first video capture unit, and analyzes a feature of the user's face;
an evaluation value calculation unit that calculates an evaluation value based on the analyzed feature of the user's face, when capturing or displaying a second video;
a recording unit that records the evaluation value to be mapped to a timeline of the second video; and
a video editing unit that extracts a partial video from the second video based on the evaluation value to generate a video summary.

2. The video processing apparatus of claim 1, further comprising a second video capture unit that captures the second video;
wherein the evaluation calculation unit calculates the evaluation value when the second video capture unit captures the second video.

3. The video processing apparatus of claim 2, wherein the evaluation value calculation unit extracts a facial expression factor based on the feature of the user's face analyzed from the first video, when the second video capture unit captures the second video.

4. The video processing apparatus of claim 1, wherein the video editing unit sequentially extracts a partial video of a timeline section, in which the evaluation value is greater than a threshold value, to generate the video summary.

5. The video processing apparatus of claim 4, wherein the video editing unit changes the threshold value such that a total time of the partial video corresponds to a predetermined editing time, thereby extracting the partial video.

6. The video processing apparatus of claim 4, wherein the video editing unit sequentially extracts the partial video of a buffered timeline section obtained by adding buffer times before, after, or both before and after the timeline section in which the evaluation value is greater than the threshold value.

7. The video processing apparatus of claim 1, wherein the evaluation value calculation unit extracts a facial expression factor based on one or more predetermined rules.

8. The video processing apparatus of claim 7, wherein the evaluation value calculation unit extracts, based on the one or more predetermined rules, the facial expression factor as at least one of a factor of eyes becoming narrow, a factor of the eyes being opened wide, a factor of corners of the eyes slanting downward, a factor of a mouth being opened, or a factor of corners of the mouth slanting upward, in the facial expression.

9. The video processing apparatus of claim 7, wherein the one or more predetermined rules are defined to give a high importance to a selected factor which is determined as greatly affecting an expression change of the user's face.

10. The video processing apparatus of claim 1, wherein the recording unit records, as metadata, the evaluation value in a video file of the second video.

11. The video processing apparatus of claim 1, wherein the recording unit records the evaluation value as a separate file that corresponds to a video file of the second video in a one-to-one relationship.

12. A video processing method comprising:
capturing at least one image of a user when capturing or displaying a second video;
recognizing the user's face from the at least one image of the user, and analyzing a feature of the user's face;
extracting a facial expression factor for the user's face based on the analyzed feature of the user's face to calculate an evaluation value;
recording the evaluation value to be mapped to a timeline of the second video; and
extracting a partial video from the second video based on the evaluation value to generate a video summary for the second video.

13. The video processing method of claim 12, further comprising capturing the second video,
wherein the calculating of the evaluation value includes calculating the evaluation value when capturing the second video.

14. The video processing method of claim 12, wherein the generating of the video summary comprises sequentially extracting a partial video of a timeline section, in which the evaluation value is greater than a threshold value, to generate the video summary.

15. The video processing method of claim 14, wherein the generating of the video summary comprises changing the threshold value such that a total time of the partial video corresponds to a predetermined editing time, thereby extracting the partial video.
